# EUROPEAN PATENT APPLICATION

(11) **EP 4 726 993 A2**
(43) Date of publication of application: **15.04.2026**
(21) Application number: 26154064.5
(22) Date of filing: 09.04.2021
(51) Int. Cl.: H02M 7/06

(54) **INDUCTION HEATING-TYPE COOKTOP**

(30) Priority: 05.03.2021 KR 20210029224
(62) Divisional of application: 21929284.4
(71) Applicant: LG Electronics Inc., Yeongdeungpo-gu Seoul 07336 (KR)
(72) Inventor: KIM, Euisung, 08592 Seou (KR); MOON, Hyunwook, 08592 Seoul (KR); PARK, Kyungho, 08592 Seoul (KR); KIM, Yangkyeong, 08592 Seoul (KR)
(74) Representative: Vossius & Partner Patentanwälte Rechtsanwälte mbB

(57) **Abstract**

The present disclosure provides a cooktop capable of heating both a magnetic receptacle and a non-magnetic receptacle by a high power output, and capable of switching a driving method of an inverter according to the type of cooking receptacle.

## Description

### TECHNICAL FIELD

The present disclosure relates to an induction heating-type cooktop, and more particularly, to an induction heating-type cooktop capable of heating both a magnetic substance and a non-magnetic substance.

### BACKGROUND ART

Various types of cooking appliances are used to heat food at home or in the restaurant. According to the related art, a gas stove using gas as a fuel has been widely used. However, recently, devices for heating an object to be heated, for example, a cooking vessel such as a pot, have been spread using electricity instead of the gas.

A method for heating the object to be heated using electricity is largely divided into a resistance heating method and an induction heating method. The electrical resistance method is a method for heating an object to be heated by transferring heat generated when electric current flows through a metal resistance wire or a non-metal heating body such as silicon carbide to the object to be heated (e.g., a cooking vessel) through radiation or conduction. In the induction heating method, when high-frequency power having a predetermined intensity is applied to a coil, eddy current is generated in the object to be heated using magnetic fields generated around the coil so that the object to be heated is heated.

In the case of such an induction heating method, there is a problem in that output power varies depending on a material of a cooking vessel even when the same current is applied to a coil. Specifically, a non-magnetic vessel has smaller specific resistance in the same operating frequency band due to lower permeability than that of a magnetic vessel, and thus an output of the non-magnetic vessel is less than that of the magnetic vessel.

Thus, a method for improving an output of not only the magnetic vessel but also the non-magnetic vessel is required. That is, a cooktop capable of heating both the magnetic vessel and the non-magnetic vessel at a high output is required.

### DISCLOSURE OF THE INVENTION

### TECHNICAL PROBLEM

An object of the present disclosure is to solve the above problems.

An object of the present disclosure is to provide a cooktop capable of heating both a magnetic vessel and a non-magnetic vessel at a high output.

An object of the present disclosure is to minimize a switching loss in a cooktop including a SiC element.

An object of the present disclosure is to minimize a heat generation problem of a switching element in a cooktop including a SiC element.

### TECHNICAL SOLUTION

A cooktop according to an embodiment of the present disclosure intends to use a SiC element as a switching element.

A cooktop according to an embodiment of the present disclosure intends to use different power control methods for each type of cooking vessel.

A cooktop according to an embodiment of the present disclosure intends to drive an inverter for each type of cooking vessel. Particularly, a cooktop according to an embodiment of the present disclosure intends to change an operating frequency according to types of cooking vessel.

One embodiment of the present disclosure is to provide a cooktop in which a switch having a long duty is disposed close to a heat dissipation fan.

An induction heating-type cooktop according to an embodiment of the present disclosure may include a working coil, an inverter including a plurality of switching elements driven to allow current to flow through the working coil, a cooking vessel determination unit for determining the type of cooking vessel, a controller configured to change a method for driving the inverter according to types of a cooking vessel.

The controller may be configured to change the method for driving the inverter so that an operating frequency is adjusted to be greater than or less than a resonant frequency according to the types of the cooking vessel.

The controller may be configured to: change the method for driving the inverter to operate in a region equal to or greater than the resonant frequency when the type of the cooking vessel is a magnetic substance, and change the method for driving the inverter to operate in a region equal to or less than the resonant frequency when the type of the cooking vessel is a non-magnetic substance.

The controller may be configured to adjust a duty of the plurality of switching elements when operating in a region equal to or less than the resonant frequency.

The controller may be configured to adjust a duty of a first switching element of the plurality of switching elements so as to be less than a duty of a second switching element of the plurality of switching elements.

The duty of the first switching element may be 50% or less.

The second switching element may be disposed closer to a heat dissipation fan than the first switching element.

The controller may be configured to adjust an output by varying in operating frequency when the operating frequency is equal to or greater than the resonant frequency, and the controller may be configured to adjust an output by varying in operating frequency when the operating frequency is equal to or less than the resonant frequency.

When the operating frequency is equal to or less than the resonant frequency, the operating frequency may be a fixed frequency.

Each of the plurality of switching elements may include an SiC element.

### ADVANTAGEOUS EFFECTS

According to an embodiment of the present disclosure, as the SiC element is applied to the cooktop, the cooktop may operate in the high frequency band to improve the heating efficiency of the non-magnetic substance.

In addition, according to an embodiment of the present disclosure, since the loss generated in the switching element is minimized as the inverter driving method is classified according to the type of cooking vessel, there may be advantage in that the heating performance for the vessel made of various materials is secured, and the user convenience such as the high output, the increase in continuous operation is improved.

In addition, since the loss of the switching element is minimized as described above, the high deterioration of the switching element may be suppressed, and the heat dissipation system such as the heat dissipation fin and the cooling fan may be miniaturized and reduced in cost.

### BRIEF DESCRIPTION OF THE DRAWINGS

FIG. 1 is a perspective view illustrating a cooktop and a cooking vessel according to an embodiment of the present disclosure.
FIG. 2 is a cross-sectional view illustrating the cooktop and the cooking vessel according to an embodiment of the present disclosure.
FIG. 3 is a circuit diagram of the cooktop according to an embodiment of the present disclosure.
FIG. 4 is a view illustrating output characteristics of the cooktop according to an embodiment of the present disclosure.
FIG. 5 is a view illustrating an operation section of an inverter of the induction heating-type cooktop to which an SiC element is applied.
FIG. 6 is a view illustrating electrical operation characteristics of the inverter according to types of cooking vessels.
FIG. 7 is a table showing a loss according to types of cooking vessels heated by an induction heating-type cooktop to which an SiC element is applied.
FIG. 8 is a block diagram illustrating a control of a cooktop according to an embodiment of the present disclosure.
FIG. 9 is a flowchart illustrating the operating method of the cooktop according to an embodiment of the present disclosure.
FIG. 10 is a view illustrating an operating frequency according to a change in inverter driving method of the cooktop according to an embodiment of the present disclosure.
FIG. 11 is a view illustrating an example of operating waveforms of the inverter when the cooking vessel of the cooktop is made of a non-magnetic substance according to an embodiment of the present disclosure.
FIG. 12 is a view illustrating an example of a state in which a plurality of switching elements are disposed according to an embodiment of the present disclosure.
FIG. 13 is a graph illustrating temperature of a plurality of switching elements when a first switching element is disposed closer to a heat dissipation fan than a second switching element in a cooktop according to an embodiment of the present disclosure.
FIG. 14 is a graph illustrating temperature of a plurality of switching elements when the second switching element is disposed closer to a heat dissipation fan than the first switching element in a cooktop according to an embodiment of the present disclosure.

### MODE FOR CARRYING OUT THE INVENTION

Hereinafter, embodiments relating to the present disclosure will be described in detail with reference to the accompanying drawings. Furthermore, terms, such as a "module" ad a "unit", are used for convenience of description, and they do not have different meanings or functions in themselves.

Hereinafter, an induction heating type cooktop and an operation method thereof according to an embodiment of the present disclosure will be described. For convenience of description, the "induction heating type cooktop" is referred to as a "cooktop".

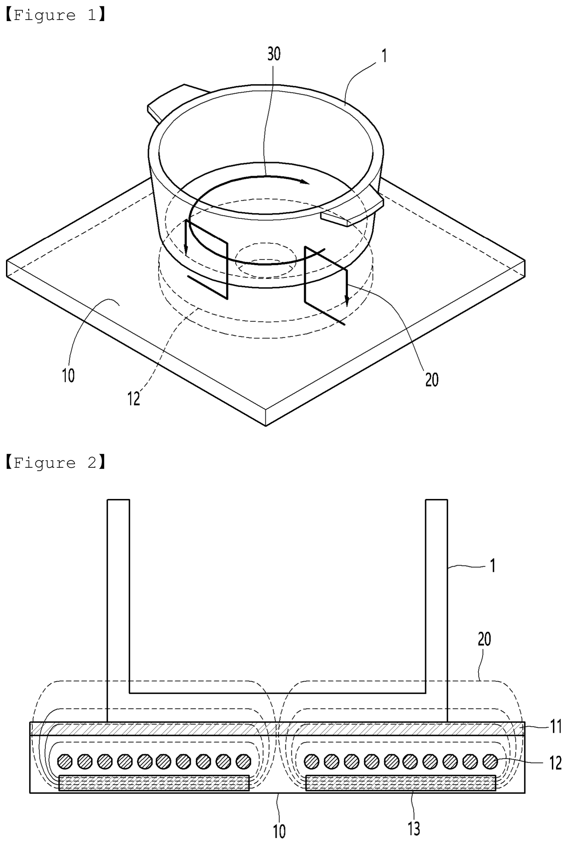

FIG. 1 is a perspective view illustrating a cooktop and a cooking container according to an embodiment of the present disclosure, and FIG. 2 is a cross-sectional view illustrating the cooktop and the cooking container according to an embodiment of the present disclosure.

A cooking vessel 1 may be disposed above the cooktop 10, and the cooktop 10 may heat a cooking vessel 1 disposed thereon.

First, a method for heating the cooking vessel 1 using the cooktop 10 will be described.

As illustrated in FIG. 1, the cooktop 10 may generate a magnetic field 20 so that at least a portion of the magnetic field 20 passes through the cooking vessel 1. Here, if an electrical resistance component is contained in a material of the cooking vessel 1, the magnetic field 20 may induce an eddy current 30 in the cooking vessel 1. Since the eddy current 30 generates heat in the cooking vessel 1 itself, and the heat is conducted or radiated up to the inside of the cooking vessel 1, contents of the cooking vessel 1 may be cooked.

When the material of the cooking vessel 1 does not contain the electrical resistance component, the eddy current 30 does not occur. Thus, in this case, the cooktop 10 may not heat the cooking vessel 1.

As a result, the cooking vessel 1 capable of being heated by the cooktop 10 may be a stainless steel vessel or a metal vessel such as an enamel or cast iron vessel.

Next, a method for generating the magnetic field 20 by the cooktop 10 will be described.

As illustrated in FIG. 2, the cooktop 10 may include at least one of an upper plate glass 11, a working coil 12, or a ferrite 13.

The upper plate glass 11 may support the cooking vessel 1. That is, the cooking vessel 1 may be placed on a top surface of the upper plate glass 11.

In addition, the upper plate glass 11 may be made of ceramic tempered glass obtained by synthesizing various mineral materials. Thus, the upper plate glass 11 may protect the cooktop 10 from an external impact.

In addition, the upper plate glass 11 may prevent foreign substances such as dust from being introduced into the cooktop 10.

The working coil 12 may be disposed below the upper plate glass 11. Current may or may not be supplied to the working coil 12 to generate the magnetic field 20. Specifically, the current may or may not flow through the working coil 12 according to on/off of an internal switching element of the cooktop 10.

When the current flows through the working coil 12, the magnetic field 20 may be generated, and the magnetic field 20 may generate the eddy current 30 by meeting the electrical resistance component contained in the cooking vessel 1. The eddy current may heat the cooking vessel 1, and thus, the contents of the cooking vessel 1 may be cooked.

In addition, heating power of the cooktop 10 may be adjusted according to an amount of current flowing through the working coil 12. As a specific example, as the current flowing through the working coil 12 increases, the magnetic field 20 may be generated more, and thus, since the magnetic field passing through the cooking vessel 1 increases, the heating power of the cooktop 10 may increase.

The ferrite 13 is a component for protecting an internal circuit of the cooktop 10. Specifically, the ferrite 13 serves as a shield to block an influence of the magnetic field 20 generated from the working coil 12 or an electromagnetic field generated from the outside on the internal circuit of the cooktop 10.

For this, the ferrite 13 may be made of a material having very high permeability. The ferrite 13 serves to induce the magnetic field introduced into the cooktop 10 to flow through the ferrite 13 without being radiated. The movement of the magnetic field 20 generated in the working coil 12 by the ferrite 13 may be as illustrated in FIG. 2.

The cooktop 10 may further include components other than the upper glass 11, the working coil 12, and the ferrite 13 described above. For example, the cooktop 10 may further include an insulator (not shown) disposed between the upper plate glass 11 and the working coil 12. That is, the cooktop according to the present disclosure is not limited to the cooktop 10 illustrated in FIG. 2.

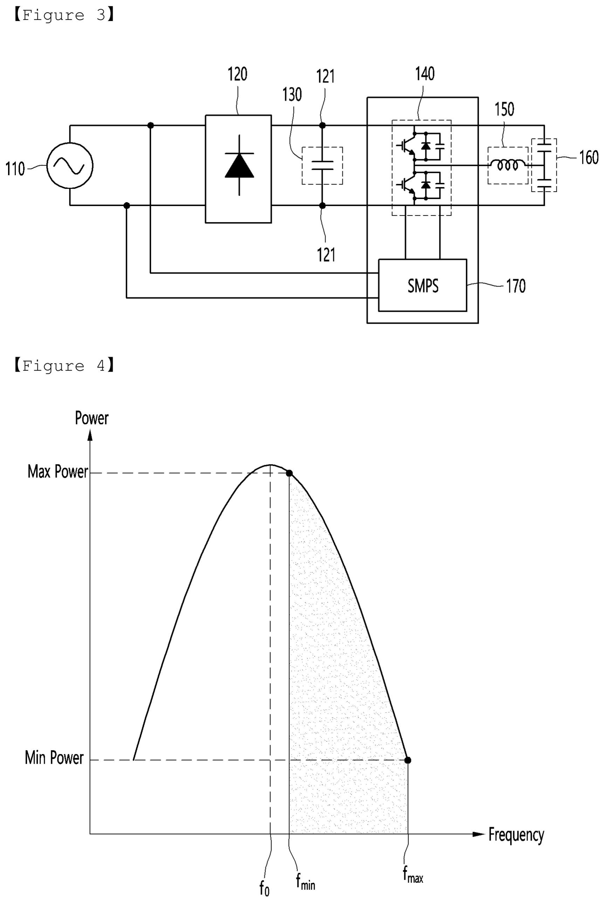

FIG. 3 is a circuit diagram of the cooktop according to an embodiment of the present disclosure.

Since the circuit diagram of the cooktop 10 illustrated in FIG. 3 is merely illustrative for convenience of description, the embodiment of the present disclosure is not limited thereto.

Referring to FIG. 3, the induction heating type cooktop may include at least some or all of a power supply 110, a rectifier 120, a DC link capacitor 130, an inverter 140, a working coil 150, a resonance capacitor 160, and an SMPS 170.

The power supply 110 may receive external power. Power received from the outside to the power supply 110 may be alternation current (AC) power.

The power supply 110 may supply an AC voltage to the rectifier 120.

The rectifier 120 is an electrical device for converting alternating current into direct current. The rectifier 120 converts the AC voltage supplied through the power supply 110 into a DC voltage. The rectifier 120 may supply the converted voltage to both DC ends 121.

An output terminal of the rectifier 120 may be connected to both the DC ends 121. Each of both the ends 121 of the DC output through the rectifier 120 may be referred to as a DC link. A voltage measured at each of both the DC ends 121 is referred to as a DC link voltage.

A DC link capacitor 130 serves as a buffer between the power supply 110 and the inverter 140. Specifically, the DC link capacitor 130 is used to maintain the DC link voltage converted through the rectifier 120 to supply the DC link voltage to the inverter 140.

The inverter 140 serves to switch the voltage applied to the working coil 150 so that high-frequency current flows through the working coil 150. The inverter 140 may include a semiconductor switch, and the semiconductor switch may be an insulated gate bipolar transistor (IGBT) or an SiC element. Since this is merely an example, the embodiment is not limited thereto. The inverter 140 drives the semiconductor switch to allow the high-frequency current to flow in the working coil 150, and thus, high-frequency magnetic fields are generated in the working coil 150.

In the working coil 150, current may or may not flow depending on whether the switching element is driven. When current flows through the working coil 150, magnetic fields are generated. The working coil 150 may heat an cooking appliance by generating the magnetic fields as the current flows.

One side of the working coil 150 is connected to a connection point of the switching element of the inverter 140, and the other side is connected to the resonance capacitor 160.

The switching element is driven by a driver (not shown), and a high-frequency voltage is applied to the working coil 150 while the switching element operates alternately by controlling a switching time output from the driver. In addition, since a turn on/off time of the switching element applied from the driver (not shown) is controlled in a manner that is gradually compensated, the voltage supplied to the working coil 150 is converted from a low voltage into a high voltage.

The resonance capacitor 160 may be a component to serve as a buffer. The resonance capacitor 160 controls a saturation voltage increasing rate during the turn-off of the switching element to affect an energy loss during the turn-off time.

The SMPS 170 (switching mode power supply) refers to a power supply that efficiently converts power according to a switching operation. The SMPS 170 converts a DC input voltage into a voltage that is in the form of a square wave and then obtains a controlled DC output voltage through a filter. The SMPS 170 may minimize an unnecessary loss by controlling a flow of the power using a switching processor.

In the case of the cooktop 10 expressed by the circuit diagram illustrated in FIG. 3, a resonance frequency is determined by an inductance value of the working coil 150 and a capacitance value of the resonance capacitor 160. Then, a resonance curve may be formed around the determined resonance frequency, and the resonance curve may represent output power of the cooktop 10 according to a frequency band.

Next, FIG. 4 is a view illustrating output characteristics of the cooktop according to an embodiment of the present disclosure.

First, a Q factor (quality factor) may be a value representing sharpness of resonance in the resonance circuit. Therefore, in the case of the cooktop 10, the Q factor is determined by the inductance value of the working coil 150 included in the cooktop 10 and the capacitance value of the resonant capacitor 160. The resonance curve may be different depending on the Q factor. Thus, the cooktop 10 has different output characteristics according to the inductance value of the working coil 150 and the capacitance value of the resonant capacitor 160.

FIG. 4 illustrates an example of the resonance curve according to the Q factor. In general, the larger the Q factor, the sharper the shape of the curve, and the smaller the Q factor, the broader the shape of the curve.

A horizontal axis of the resonance curve may represent a frequency, and a vertical axis may represent output power. A frequency at which maximum power is output in the resonance curve is referred to as a resonance frequency f0.

In general, the cooktop 10 uses a frequency in a right region based on the resonance frequency f0 of the resonance curve. In addition, the cooktop 1 may have a minimum operating frequency and a maximum operating frequency, which are set in advance.

For example, the cooktop 10 may operate at a frequency corresponding to a range from the maximum operating frequency fₘₐₓ to the minimum operating frequency fₘᵢₙ. That is, the operating frequency range of the cooktop 10 may be from the maximum operating frequency fₘₐₓ to the minimum operating frequency fₘᵢₙ.

For example, the maximum operating frequency fₘₐₓ may be an IGBT maximum switching frequency. The IGBT maximum switching frequency may mean a maximum driving frequency in consideration of a resistance voltage and capacity of the IGBT switching element. For example, the maximum operating frequency fₘₐₓ may be 75 kHz.

The minimum operating frequency fₘᵢₙ may be about 20 kHz. In this case, since the cooktop 10 does not operate at an audible frequency (about 16 Hz to 20 kHz), noise of the cooktop 10 may be reduced.

Since setting values of the above-described maximum operating frequency fₘₐₓ and minimum operating frequency fₘᵢₙ are only examples, the embodiment of the present disclosure is not limited thereto.

When receiving a heating command, the cooktop 10 may determine an operating frequency according to a heating power level set by the heating command. Specifically, the cooktop 10 may adjust the output power by decreasing in operating frequency as the set heating power level is higher and increasing in operating frequency as the set heating power level is lower. That is, when receiving the heating command, the cooktop 10 may perform a heating mode in which the cooktop operates in one of the operating frequency ranges according to the set heating power.

The cooktop 10 requires large current to improve heating efficiency of not only for the magnetic substance but also for the non-magnetic cooking vessel 1.

Since the allowable current of the IGBT element is low as the frequency increases, the heating efficiency of the non-magnetic cooking vessel 1 may be limited.

The SiC element may tolerate high current, but due to element characteristics, the higher the current, the greater a power loss. Therefore, the cooktop 10 that minimizes the problem of the power loss is required.

Thus, an object of the present disclosure is to provide a cooktop 10 that minimizes an increase in power loss while including the inverter 140 constituted by the SiC element to heat various types of cooking vessels 1.

In the present specification, the magnetic substance may mean a material having ferromagnetism (ferromagnetic substance), and the non-magnetic substance may include a material having weak magnetism other than the ferromagnetic substance (weak magnetic substance) or a material having no magnetism at all.

In addition, in the present specification, when the cooking vessel 1 is made of the magnetic substance, the expression of voltage/current/resistance/power, etc. is large (high)/small (low) means that the voltage/current/resistance/power, etc. is relatively large (high) or small (low) compared to the case in which the cooking vessel 1 is made of the non-magnetic substance, conversely, when the cooking vessel 1 is made of the non-magnetic substance, the expression of voltage/current/resistance/power, etc. is large (high)/small (low) means that the voltage/current/resistance/power, etc. is relatively large (high) or small (low) compared to the case in which the cooking vessel 1 is made of the magnetic substance.

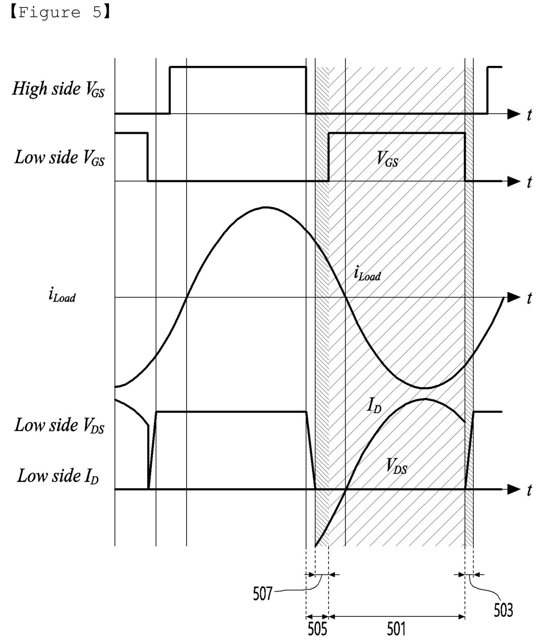

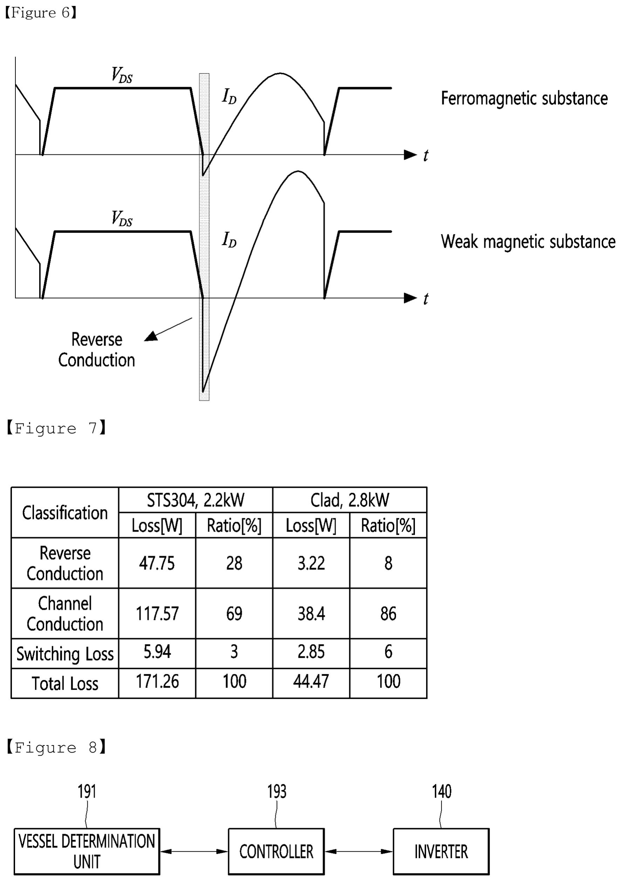

FIG. 5 is a view illustrating an operation section of the inverter of the induction heating-type cooktop to which the SiC element is applied, and FIG. 6 is a view illustrating electrical operation characteristics of the inverter according to types of cooking vessels.

Referring to the example of FIG. 5, the operation section of the inverter 140 may be divided into a channel conduction section 501, a switch turn-off section 503, and a dead time section 505.

The channel conduction section 501 may be a section in which current flows through a channel inside the SiC element.

The switch turn-off section 503 may be a section in which a switch turn-off loss occurs during the turn-off section of the SiC element.

The dead time section 505 may be a section for safe operation when the SiC element is turned on. The dead time section may include a reverse conduction section 507 in which the current flows through an internal diode.

Since the current flows through the internal diode in the reverse conduction section, especially when the cooking vessel 1 is made of the non-magnetic substance, high current may flow through the SiC element, and thus, a large power loss may occur in the reverse conduction section.

In detail, when the cooking vessel 1 is made of the magnetic substance, it has large equivalent resistance (e.g., about 2 to 3 Q) when magnetically coupled to the working coil 150, and as illustrated in FIG. 6, since a phase difference between the resonance voltage and current is small, rated power may be secured even at low current.

When the cooking vessel 1 is made of the non-magnetic substance, it has low equivalent resistance (e.g., about 1 Q) when magnetically coupled to the working coil 150, and as illustrated in FIG. 6, since a phase difference between the resonance voltage and current is large, high current may be required to secure the rated power.

Therefore, since higher current flows when heating the non-magnetic cooking vessel 1, the power loss also increases in the reverse conduction section. This is done for a reason, in which the SiC element has a low loss characteristic because the on-resistance (Rds(on)) of the channel is very small in terms of structure, but the internal diode (body diode) of the SiC element does not have a low loss characteristic, and thus, although the reverse conduction section in which the current flows through the internal diode is relatively short, a large power loss occurs.

The increase in power loss according to the type of the cooking vessel 1 may be confirmed through the table shown in FIG. 7.

FIG. 7 is a table showing a loss according to types of cooking vessels heated by the induction heating-type cooktop to which the SiC element is applied.

In the table illustrated in FIG. 7, STS 304 is an example of the non-magnetic cooking vessel 1, and clad is an example of the magnetic cooking vessel 1.

Referring to FIG. 7, it is seen that a loss ratio in the reverse conduction section is 8% when the cooking vessel 1 is made of the magnetic substance, but increases very significantly to 28% when the cooking vessel 1 is made of the non-magnetic substance.

Thus, the present disclosure intends to minimize the loss even when the cooking vessel 1 is made of the non-magnetic substance. For this, in the cooktop 10 according to an embodiment of the present disclosure, the switching element may be designed in a bridge shape, the resonance capacitor 160 may be designed in a bridge shape to be able to respond to large resonance current, and the working coil 150 may be connected between the inverter 140 and the resonant capacitor 160.

In addition, the cooktop 10 may change the driving method of the inverter 140 according to the type of the cooking vessel 1. For this, the cooktop 10 may determine the type of cooking vessel 1.

FIG. 8 is a block diagram illustrating a control of the cooktop according to an embodiment of the present disclosure.

In FIG. 8, only one example of components that are necessary to explain the control method of the cooktop 10 according to the present disclosure is illustrated, and some of the components illustrated in FIG. 8 may be omitted, or other components that are not illustrated in FIG. 8 may be added.

The cooktop 10 may include a vessel determination unit 191, a controller 193, and an inverter 140.

The inverter 140 may include a plurality of switching elements driven to allow current to flow through the working coil 150. For example, the plurality of switching elements may be SiC (silicon carbide) elements, but is not limited thereto. For example, the plurality of switching elements may be GaN elements. That is, the plurality of switching elements may be wide band-gap (WBG) elements.

The vessel determination unit 191 may determine the type of cooking vessel 1. In more detail, the vessel determination unit 191 may determine a material of the cooking vessel 1. In summary, the vessel determination unit 191 may acquire the type of cooking vessel 1 or the material of the cooking vessel 1. The type of cooking vessel 1 may be a concept including the material of the cooking vessel 1.

The vessel determination unit 191 may determine the type of cooking vessel 1 in various manners.

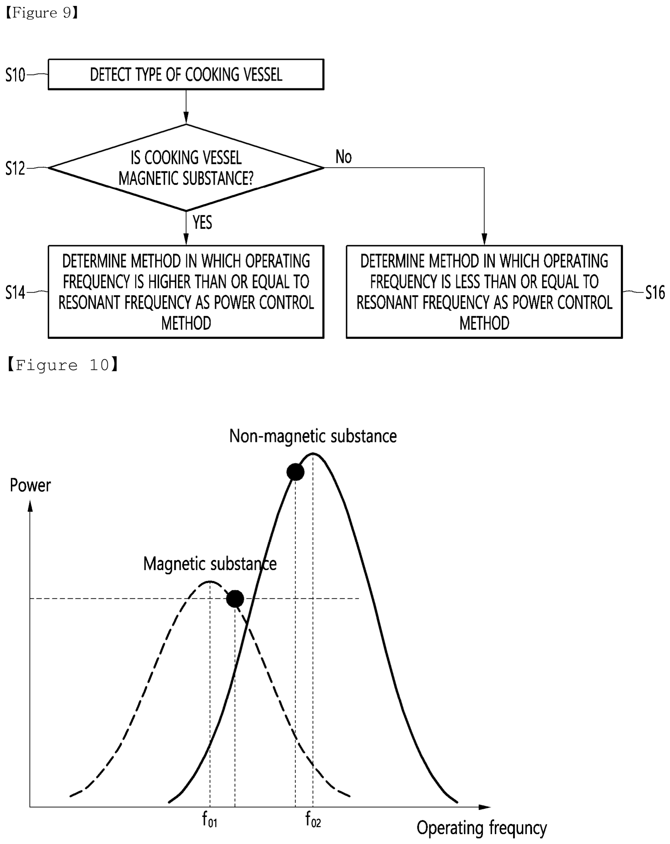

The controller 193 may change the driving method of the inverter 140 according to the type of cooking vessel 1. Referring to FIG. 9, a method of changing the driving method of the inverter 140 according to the type of cooking vessel 1 will be described in more detail.

FIG. 9 is a flowchart illustrating an operating method of the cooktop according to an embodiment of the present disclosure.

The controller 193 may control the vessel determination unit 191 to detect the type of cooking vessel 1 (S10).

The controller 193 may acquire whether the cooking vessel 1 is made of the magnetic substance (S12).

On the other hand, the controller 193 may acquire whether the cooking vessel 1 is made of the non-magnetic substance.

If the cooking vessel 1 is made of the magnetic substance, the controller 193 may determine a method in which an operating frequency is higher than or equal to a resonant frequency as the power control method (S14).

That is, if the type of cooking vessel 1 is made of the magnetic substance, the controller 193 may change the driving method of the inverter 140 to operate in a region that is equal to or higher than the resonant frequency.

If the cooking vessel 1 is made of the non-magnetic substance, the controller 193 may determine a method in which an operating frequency is less than or equal to the resonant frequency as the power control method (S16).

That is, if the type of cooking vessel 1 is made of the non-magnetic substance, the controller 193 may change the driving method of the inverter 140 to operate in a region that is lower than the resonant frequency.

In summary, the controller 193 may change the driving method of the inverter 140 so that the operating frequency is adjusted to be higher or lower than the resonant frequency according to the type of cooking vessel 1.

FIG. 10 is a view illustrating the operating frequency according to a change in inverter driving method of the cooktop according to an embodiment of the present disclosure.

In the example of FIG. 10, the first resonance frequency f₀₁ may be a resonance frequency when the cooking vessel 1 is made of the magnetic substance, and the second resonance frequency f02 may be a resonance frequency when the cooking vessel 1 is made of the non-magnetic substance.

The cooktop 10 may control the inverter 140 so that the operating frequency is higher than the first resonant frequency f₀₁ when the cooking vessel 1 is made of the magnetic substance, and the cooktop 10 may control the inverter 140 so that the operating frequency is equal to or less than the second resonant frequency f02 when the cooking container 1 is made of the non-magnetic substance.

When the controller 193 controls the operating frequency to be equal to or higher than the first resonant frequency f₀₁, the controller 193 may change an output by varying in operating frequency according to a heating power level. That is, the controller 193 may adjust the output by varying in operating frequency when the operating frequency is equal to or higher than the resonant frequency. When the cooking vessel 1 is made of the magnetic substance, the controller 193 may adjust the output in a region above a resonance point by a pulse frequency modulation (PFM) control method.

In addition, when the controller 193 controls the operating frequency to be equal to or less than the second resonant frequency f₀₂, the controller 193 may change the output by varying in duty according to the heating power level. That is, the controller 193 may adjust the output by adjusting the duty of the plurality of switching elements when the operating frequency is less than or equal to the resonant frequency. When the operating frequency is equal to or less than the resonant frequency, the operating frequency may be a fixed frequency. When the cooking vessel 1 is made of the non-magnetic substance, the controller 193 may adjust the output in a region below the resonance point using the pulse width modulation (PWM) control method.

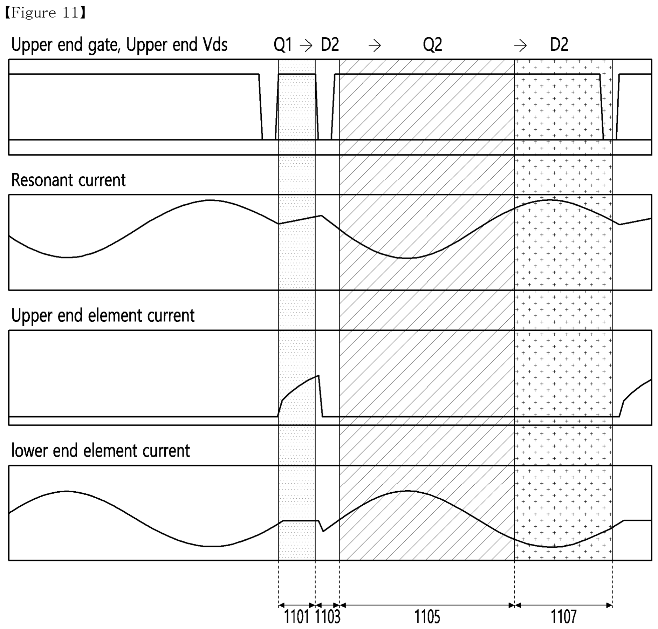

FIG. 11 is a view illustrating an example of operating waveforms of the inverter when the cooking vessel of the cooktop is made of the non-magnetic substance according to an embodiment of the present disclosure.

The controller 193 may control the inverter 140 to operate in a region below the resonant frequency when the cooking vessel 1 is made of the non-magnetic substance and may adjust the duty of the plurality of switching elements when operating in the region below the resonance frequency.

The controller 193 may adjust the duty of the first switching element among the plurality of switching elements to be smaller than that of the second switching element. The controller 193 may adjust the duty of the first switching element to the first duty and may adjust the duty of the second switching element to a section remaining after subtracting the first duty from the entire cycle (100%). The first duty may be 50% or less. For example, the first duty may be 30%, and the second duty may be 70%.

In FIG. 11, the first section 1101 may be a section in which the first switching element is turned on, and the third section 1105 may be a section in which the second switching element is turned on. The second section 1103 may be a section between the first section 1103 and the third section 1105, and the fourth section 1107 may be a section between the second section 1105 and the first section 1101.

When the second section 1103 is changed to the third section 1105, the current flows through the internal diode of the second switching element and then flows into the second switching element, and thus, there may be an advantage that no switching loss occurs because a zero-voltage switch (ZVS) is turned on. In addition, when changing from the fourth section 1107 to the first section 1101, the current flows through the internal diode of the second switching element and then flows into the first switching element, and thus, a loss due to reverse current occurs slightly.

That is, referring to FIG. 11, in the first switching element, although the loss occurs once due to hard switching, since the current is low in the reverse conduction section, the amount of loss is small. In addition, since no loss occurs due to soft switching in the second switching element, and only a slight loss occurs in the channel conduction section, there may be advantage in that an increase in the amount of loss is suppressed.

In this case, since the second switching element has a duty longer than that of the first switching element, the amount of generated heat may slightly increase. That is, as described above, when the cooking vessel 1 of the cooktop 10 is made of the non-magnetic substance, and the operating frequency is controlled below the resonant frequency, the amount of generated heat in the second switching element may be greater than that in the first switching element. Thus, in the cooktop 10 according to an embodiment of the present disclosure, the second switching element may be disposed closer to the heat dissipation fan than the first switching element.

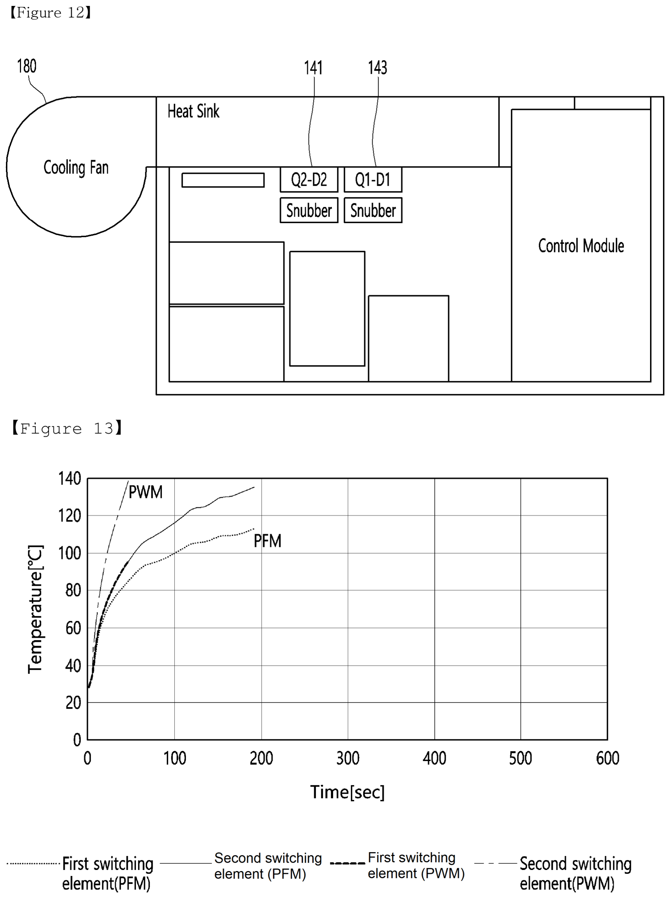

FIG. 12 is a view illustrating an example of a state in which the plurality of switching elements are disposed according to an embodiment of the present disclosure.

As illustrated in FIG. 12, the cooktop 10 may further include a heat dissipation fan 180 for cooling the internal components. The second switching element 141 may be disposed closer to the heat dissipation fan 180 than the first switching element 143. That is, the switching element of which a duty is controlled to be longer among the plurality of switching elements may be disposed close to the heat dissipation fan 180.

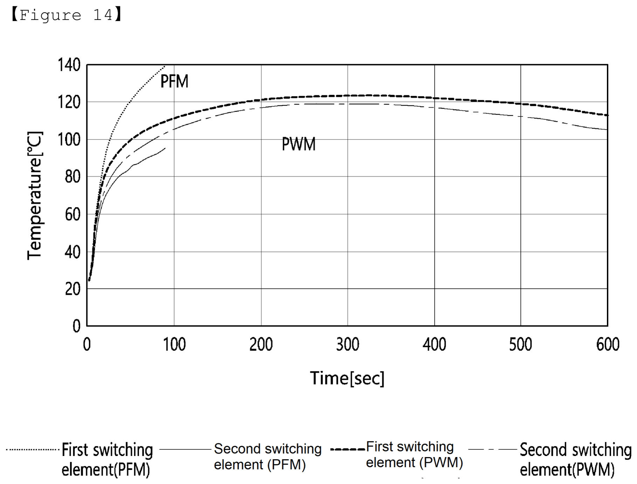

FIG. 13 is a graph illustrating temperature of the plurality of switching elements when the first switching element is disposed closer to the heat dissipation fan than the second switching element in the cooktop according to an embodiment of the present disclosure, and FIG. 14 is a graph illustrating temperature of the plurality of switching elements when the second switching element is disposed closer to the heat dissipation fan than the first switching element in the cooktop according to an embodiment of the present disclosure.

Here, the first switching element may be a switching element controlled to have a shorter duty than the second switching element, and conversely, the second switching element may be a switching element controlled to have a longer duty than the first switching element. Therefore, it is assumed that the amount of heat generated in the second switching element is greater than that in the first switching element.

Referring to FIG. 13, since the second switching element having a relatively large amount of heat is disposed farther from the heat dissipation fan, it may be seen that the temperature of the second switching element rapidly rises.

Referring to FIG. 14, since the second switching element having a relatively large amount of heat is disposed closer to the heat dissipation fan, a temperature of the second switching element rises gently. Partially, it may be confirmed that the temperature rise curves of the device and the second switching element are similar to each other.

In summary, in the cooktop 10 according to an embodiment of the present disclosure, if the cooking vessel 1 is made of the magnetic substance, the power control may be performed by the frequency control method in the frequency domain above the resonance point, and if the cooking vessel 1 is made of the non-magnetic substance, the power control may be performed in a duty control method in a region below the resonance point. Thus, there may be an advantage in that the heating performance for cooking vessels made of various materials may be secured by minimizing the amount of loss occurring in the switching element, thereby providing convenience such as high power and an increase in continuous operation time to the user.

In addition, since the plurality of switching elements of the cooktop 10 are disposed closer to the heat dissipation fan than the switching elements having a shorter duty, there may be advantage in that the high deterioration of the switching elements is minimized, and the heat dissipation fins and the heat dissipation fan are miniaturized and reduced in cost.

The above-disclosed subject matter is to be considered illustrative, and not restrictive, and the appended claims are intended to cover all such modifications, enhancements, and other embodiments, which fall within the true spirit and scope of the present disclosure.

Thus, the embodiment of the present disclosure is to be considered illustrative, and not restrictive, and the technical spirit of the present disclosure is not limited to the foregoing embodiment.

Therefore, the scope of the present disclosure is defined not by the detailed description of the invention but by the appended claims, and all differences within the scope will be construed as being included in the present disclosure.
The present invention is further defined by the following items:
1. An induction heating-type cooktop comprising:
   a working coil;
   an inverter comprising a plurality of switching elements driven to allow current to flow through the working coil;
   a cooking vessel determination unit for determining the type of cooking vessel; and
   a controller configured to change a method for driving the inverter according to types of a cooking vessel.
2. The induction heating-type cooktop according to item 1, wherein the controller is configured to change the method for driving the inverter so that an operating frequency is adjusted to be greater than or less than a resonant frequency according to the types of the cooking vessel.
3. The induction heating-type cooktop according to item 1, wherein the controller is configured to:
   change the method for driving the inverter to operate in a region equal to or greater than the resonant frequency when the type of the cooking vessel is a magnetic substance, and
   change the method for driving the inverter to operate in a region equal to or less than the resonant frequency when the type of the cooking vessel is a non-magnetic substance.
4. The induction heating-type cooktop according to item 2, wherein the controller is configured to adjust a duty of the plurality of switching elements when operating in a region equal to or less than the resonant frequency.
5. The induction heating-type cooktop according to item 4, wherein the controller is configured to adjust a duty of a first switching element of the plurality of switching elements so as to be less than a duty of a second switching element of the plurality of switching elements.
6. The induction heating-type cooktop according to item 5, wherein the duty of the first switching element is 50% or less.
7. The induction heating-type cooktop according to item 5, wherein the second switching element is disposed closer to a heat dissipation fan than the first switching element.
8. The induction heating-type cooktop according to item 2, wherein the controller is configured to adjust an output by varying in operating frequency when the operating frequency is equal to or greater than the resonant frequency, and
   the controller is configured to adjust an output by varying in operating frequency when the operating frequency is equal to or less than the resonant frequency.
9. The induction heating-type cooktop according to item 8, wherein, when the operating frequency is equal to or less than the resonant frequency, the operating frequency is a fixed frequency.
10. The induction heating-type cooktop according to item 1, wherein each of the plurality of switching elements comprises an SiC element.

## Claims

1. An induction heating-type cooktop comprising:
a working coil;
an inverter including a plurality of switching elements configured to drive current through the working coil; and
a controller configured to control the inverter, wherein the controller is configured to:
operate the inverter at an operating frequency equal to or lower than a resonant frequency when a cooking vessel is a non-magnetic substance, and
control the plurality of switching elements such that a first switching element of the plurality of switching elements operates with a first duty and a second switching element of the plurality of switching elements operates with a second duty longer than the first duty.

2. The induction heating-type cooktop according to claim 1, wherein the operating frequency equal to or lower than the resonant frequency, is a fixed frequency.

3. The induction heating-type cooktop according to claim 1 or 2, wherein the controller is configured to control an output of the cooktop by adjusting the duties of the plurality of switching elements.

4. The induction heating-type cooktop according to any one of claims 1 to 3, wherein the plurality of switching elements is controlled using pulse width modulation, PWM.

5. The induction heating-type cooktop according to any one of claims 1 to 4, wherein the first duty is 50% or less of one switching cycle.

6. The induction heating-type cooktop according to any one of claims 1 to 5, wherein the second switching element operates with a longer conduction interval than the first switching element during one switching cycle.

7. The induction heating-type cooktop according to any one of claims 1 to 6, wherein the duty difference between the first switching element and the second switching element is applied during operation below the resonant frequency.

8. The induction heating-type cooktop according to any one of claims 1 to 7, further comprising a cooking vessel determination unit configured to determine whether the cooking vessel is a non-magnetic substance.

9. The induction heating-type cooktop according to any one of claims 1 to 8, wherein the plurality of switching elements comprises wide band-gap semiconductor elements.

10. The induction heating-type cooktop according to claim 9, wherein the wide band-gap semiconductor elements comprise silicon carbide, SiC, elements.
